(19) Europäisches Patentamt
European Patent Office
Office européen des brevets

(11) EP 0 388 358 B1

(12) # EUROPÄISCHE PATENTSCHRIFT

(45) Veröffentlichungstag und Bekanntmachung des Hinweises auf die Patenterteilung:
**25.09.1996 Patentblatt 1996/39**

(51) Int Cl.[6]: **C08G 65/40**

(21) Anmeldenummer: **90810182.7**

(22) Anmeldetag: **08.03.1990**

(54) **Neue Polyarylenether**

Polyarylene ether

Poly(éther d'arylène)

(84) Benannte Vertragsstaaten:
**DE ES FR GB IT NL SE**

(30) Priorität: **17.03.1989 CH 995/89**

(43) Veröffentlichungstag der Anmeldung:
**19.09.1990 Patentblatt 1990/38**

(73) Patentinhaber: **SUMITOMO CHEMICAL COMPANY LIMITED**
**Osaka-shi, Osaka 541 (JP)**

(72) Erfinder:
- **Pfaendner, Rudolf, Dr.**
  **D-6149 Rimbach/Odenwald 1 (DE)**
- **Kainmüller, Thomas, Dr.**
  **D-6145 Lindenfels/Odenwald (DE)**
- **Hoffmann, Kurt, Dr.**
  **D-6147 Lautertal 2 (DE)**
- **Kramer, Andreas, Dr.**
  **CH-3186 Düdingen (CH)**
- **Stockinger, Friedrich**
  **CH-1784 Courtepin (CH)**

(74) Vertreter: **Rauh, Peter A., Dr. et al**
**Vossius & Partner,**
**Postfach 86 07 67**
**81634 München (DE)**

(56) Entgegenhaltungen:
**WO-A-88/07561** **DE-A- 3 614 602**

- **PATENT ABSTRACTS OF JAPAN vol. 12, no. 132 (C-490)(2979) 22. April 1988 & JP-A- 62 253 627 ( ASAHI CHEM IND CO LTD ) 5. November 1987**

Bemerkungen:
Die Akte enthält technische Angaben, die nach dem Eingang der Anmeldung eingereicht wurden und die nicht in dieser Patentschrift enthalten sind.

EP 0 388 358 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die vorliegende Erfindung betrifft neue Polyarylenether, ein Verfahren zu deren Herstellung und deren Verwendung als technische Werkstoffe.

Aus den JP Kokai's 253,618/87; 253,619/87 und 253,627/87 sind Polyetherketone und -sulfone bekannt, welche phenylsubstituierte Arylen-brückenglieder enthalten. Diese werden als in üblichen Lösungsmitteln unlöslich beschrieben. Für viele Anwendungen besteht allerdings das Bedürfnis, Polymere dieser Art aus einer Lösung heraus, z.B. zu Filmen zu verarbeiten oder in andere Systeme, wie Matrixharze einzubringen. In der US 3,875,103 wird erwähnt, dass Polyethersulfone in chlorierten Kohlenwasserstoffen instabile Lösungen bilden. Um diesen Nachteil zu umgehen, wird ein spezielles Lösungsmittelgemisch (Cyclohexanon/DMSO) eingesetzt.

Ziel der vorliegenden Erfindung war es, Polyarylenether bereitzustellen, welche sich als technische Werkstoffe mit sehr guten mechanischen Eigenschaften eignen und welche gegenüber bekannten Polyarylenetherketonen und -sulfonen eine verbesserte Löslichkeit aufweisen. Dies kann überraschenderweise dadurch erreicht werden, wenn in die Polyarylenetherketon oder -sulfon-Kette Strukturelemente eingebaut werden, welche sich von aromatisch substituierten Hydrochinonen ableiten.

Die erfindungsgemässen hochwertigen thermoplastischen Harze sind Polyarylenether, die, bezogen auf die Gesamtmenge der im Polyetherharz vorhandenen Strukturelemente, 5-100 mol-% eines wiederkehrenden Strukturelements der Formel I

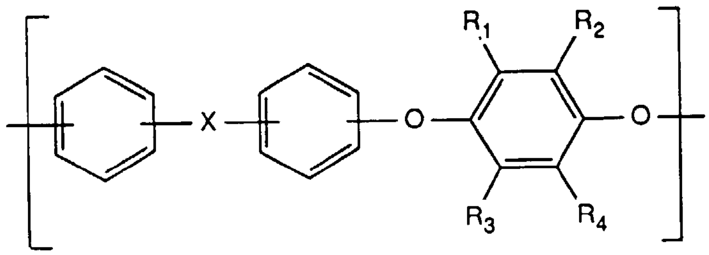

(I)

und 0-95 mol-% eines wiederkehrenden Strukturelements der Formel II

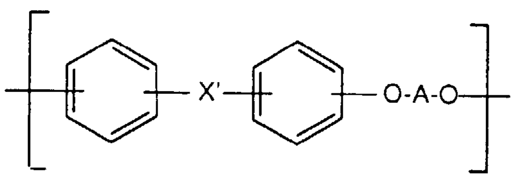

(II)

enthalten, worin X und X′ unabhängig voneinander -SO-, $-SO_2-$ oder -CO- bedeuten, einer der Reste $R_1$, $R_2$, $R_3$ und $R_4$ Phenyl oder mit einer bis drei $(C_1-C_4)$Alkylgruppen substituiertes Phenyl ist und die übrigen Reste $R_1$, $R_2$, $R_3$ und $R_4$ unabhängig voneinander Wasserstoff, $C_1-C_4$-Alkyl, Phenyl oder mit einer bis drei $(C_1-C_4)$-Alkylgruppen substituiertes Phenyl sind und A eine Gruppe der Formeln IIIa bis IIIg darstellt

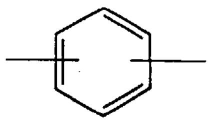 (IIIa), 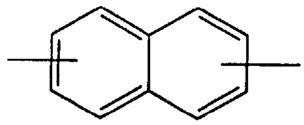 (IIIb), 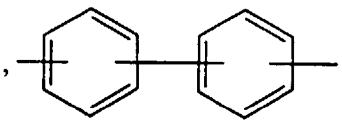 (IIIc),

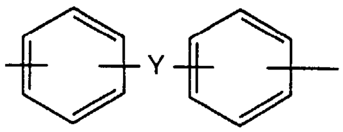 (IIId), 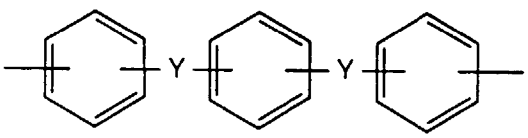 (IIIe),

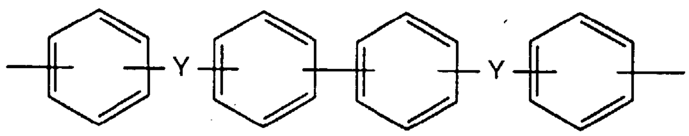 (IIIf) oder,

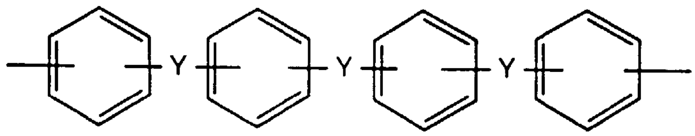 (IIIg),

wobei Y für $-CH_2-$, $-C(CH_3)_2-$, $-C(CH_3)(C_6H_5)-$, $-C(CF_3)_2-$, -S-,-SO-, $-SO_2-$, -O- oder -CO- steht, mit der Massgabe, dass mindestens 25 % der Bindungen X und/oder X′ und/oder Y $-SO_2-$ bedeuten.

Die aromatischen Gruppen können gegebenenfalls durch ein bis vier ($C_1$-$C_4$)Alkylgruppen, vorzugsweise ein oder zwei ($C_1$-$C_4$-)Alkylgruppen, wie z.B. Methyl substituiert sein.

Kommen mehrere Brückenglieder Y pro Molekül vor, so müssen diese nicht zwingend die gleiche Bedeutung haben.

Erfindungswesentlich ist, dass mindestens einer der Substituenten $R_1$, $R_2$, $R_3$ oder $R_4$ in der Formel I eine Phenylgruppe ist. Diese ist in besonders bevorzugten Verbindungen unsubstituiert, kann aber auch durch eine, zwei oder drei ($C_1$-$C_4$)Alkylgruppen, wie Methyl, Ethyl, n-Propyl, Isopropyl, n-Butyl, sec.-Butyl oder tert.-Butyl, vorzugsweise Methyl substituiert sein.

Die übrigen Substituenten $R_1$, $R_2$, $R_3$ und $R_4$ können, soweit das die sterischen Verhältnisse zulassen, die gleiche - oben beschriebene - Bedeutung haben oder Wasserstoff bzw. $C_1$-$C_4$-Alkyl, wie Methyl, Ethyl, n-Propyl, Isopropyl oder n-Butyl bedeuten. Bevorzugt ist Methyl und insbesondere Wasserstoff.

Ganz besonders bevorzugte Verbindungen enthalten Strukturelemente der Formel I, worin einer oder zwei der Reste $R_1$, $R_2$, $R_3$ und $R_4$ Phenyl oder Tolyl, insbesondere Phenyl sind und die übrigen insbesondere Wasserstoff bedeuten.

Die bevorzugte Bedeutung von X in der Formel I und X′ in der Formel II ist $-SO_2-$ oder -CO- und insbesondere $-SO_2-$.

Die bevorzugte Bedeutung von Y in den Formeln IIId, IIIe, IIIf und IIIg ist $-C(CH_3)_2-$, -S-, $-SO_2-$, -O- oder -CO-. Besonders bevorzugt ist $-SO_2-$.

Die Gruppe A entspricht vorzugsweise einer Formel IIIa, IIIb, IIIc oder IIId, worin Y $-C(CH_3)_2$, -S-, $-SO_2-$, -O- oder -CO- bedeutet. Besonders bevorzugt sind Gruppen der Formeln IIIb, IIIc oder IIId.

Vorzugsweise enthalten die erfindungsgemässen Polyarylenether 10-100 mol-% eines wiederkehrenden Strukturelements der Formel I und 90-0 mol-% eines wiederkehrenden Strukturelements der Formel II.

Besonders bevorzugte Polyarylenether enthalten 25-100 mol-% eines wiederkehrenden Strukturelements der Formel I und 75-0 mol-% eines wiederkehrenden Strukturelements der Formel II.

Es wurde gefunden, dass für gute thermische Eigenschaften (hohe Glasübergangstemperatur) der Anteil an $-SO_2-$Gruppen (X und/oder X′ und/oder Y) mindestens 25 %, bevorzugt mehr als 50 %, ganz besonders bevorzugt mehr als 75 % betragen soll.

Die erfindungsgemässen Polyarylenether besitzen ein durchschnittliches Gewichtsmittel des Molekulargewichts von 2000 bis 200'000, vorzugsweise 5'000-100'000, bestimmbar z.B. durch Lichtstreuung.

Die erfindungsgemässen Polyarylenether können z.B. hergestellt werden, indem man mindestens eine Verbindung der Formel IV

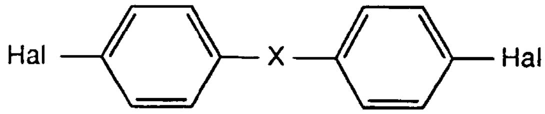 (IV),

worin Hal für Halogen, insbesondere Fluor oder Chlor steht, und X die oben angegebene Bedeutung hat, mit einem Hydrochinon der Formel (V)

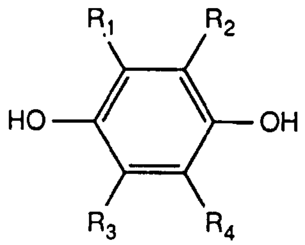 (V),

worin $R_1$, $R_2$, $R_3$ und $R_4$ die oben angegebenen Bedeutungen haben, allein oder mit einem Gemisch aus einer Verbindung der Formel V und einem darin bis zu 95 mol-% enthaltenen Phenol der Formel VI

HO-A-OH (VI),

worin A die oben angegebene Bedeutung hat,
in an sich bekannter Weise in Gegenwart alkalischer Katalysatoren in einem polaren aprotischen Lösungsmittel polykondensiert.

Anstelle der Diphenole der Formeln V und VI können in an sich bekannter Weise auch die entsprechenden Alkali- oder Erdalkali-Phenolate, z.B. die Kalium- oder Calcium-phenolate, eingesetzt werden.

Ueblicherweise wird die Polykondensationsreaktion in etwa äquimolaren Verhältnissen der Verbindungen IV:V bzw. IV:(V+VI) durchgeführt. Unter etwa äquimolaren Mengen versteht man in diesem Zusammenhang ein Molverhältnis von 0,8:1,2 bis 1,2:0,8, bevorzugt 0,8:1,0 bis 1,0:0,8.

Als alkalische Katalysatoren verwendet man in diesem Verfahren in der Regel Alkali- und Erdalkalicarbonate, wie Natrium-, Kalium- oder Calciumcarbonat; doch können auch andere alkalische Reagentien, wie Natriumhydroxid, Kaliumhydroxid oder Calciumhydroxid Verwendung finden.

Polare, aprotische Lösungsmittel, die beim Verfahren zur Herstellung der erfindungsgemässen Polyetherharze eingesetzt werden können, sind beispielsweise Dimethylsulfoxid, Dimethylacetamid, Diethylacetamid, Tetramethylharnstoff, N-Methylcaprolactam, N-Methylpyrrolidon und bevorzugt Diphenylsulfon.

Die Reaktion wird zweckmässig bei erhöhter Temperatur durchgeführt, vorzugsweise bis zur Rückfluss-Temperatur des Lösungsmittels, also etwa bis 350°C.

Häufig empfiehlt sich die Mitverwendung eines Schleppmittels, wie z.B. Chlorbenzol, Xylol oder Toluol, um das bei der Umsetzung gebildete Wasser azeotrop aus dem Reaktionsgemisch entfernen zu können.

Die Verbindungen der Formel IV sind bekannt und zum Teil im Handel erhältlich. Geeignete Verbindungen der Formel IV sind beispielsweise 4,4′-Difluorobenzophenon; 1,3-Bis-(4-fluorobenzoyl)benzol, 4,4′-Dichlorobenzophenon, und bevorzugt 4,4′-Difluorodiphenylsulfon und 4,4′-Dichlorodiphenylsulfon.

Die Verbindungen der Formel V sind ebenfalls bekannt. Phenylhydrochinon ist im Handel erhältlich. Die übrigen Verbindungen der Formel V können beispielsweise durch Reduktion der entsprechenden Benzochinone erhalten werden. Die Herstellung der substituierten Benzochinone kann beispielsweise durch Reaktion von Benzochinon mit aromatischen Diazoniumverbindungen erfolgen, z.B. gemäss D.E. Kvalnes, J. Am. Chem. Soc. 56,2478 (1934).

Insbesondere geeignet sind beispielsweise die folgenden Verbindungen der Formel V: Phenylhydrochinon, 2,5-Diphenylhydrochinon; 2,6-Diphenylhydrochinon; Tolylhydrochinon; 2-Methyl-5-phenylhydrochinon, 2-Ethyl-5-phenylhydrochinon oder 2-Methyl-5-(2,4,6-trimethylphenyl)-hydrochinon.

Die Verbindungen der Formel VI sind ebenfalls im Handel erhältlich. Geeignete Verbindungen sind beispielsweise Hydrochinon, Bisphenol-A; 1,5-Dihydroxynaphthalin, 2,6-Dihydroxynaphthalin, 2,7-Dihydroxynaphthalin, 4,4′-Dihydroxybenzophenon, 4,4′-Dihydroxydiphenylether; 4,4′-Dihydroxydiphenylsulfid und bevorzugt 4,4′-Dihydroxybiphenyl und 4,4′-Dihydroxydiphenylsulfon.

Beispiele für alkylsubstituierte Verbindungen der Formel VI sind 4,4′-Dihydroxy-3,3′,5,5′-tetramethylbiphenyl und 4,4′-Dihydroxy-3,3′,5,5′-tetramethyldiphenylsulfon.

Die erfindungsgemässen Polyetherharze können in der für Thermoplaste üblichen Weise eingesetzt und z.B. zu Formkörpern oder Folien verarbeitet werden, oder als Matrixharze, Klebstoffe oder Ueberzugsmittel eingesetzt werden.

Vor der Verarbeitung der beispielsweise als Presspulver, Schmelze oder Lösung vorliegenden Polyarylenether können übliche Zusatzstoffe, wie beispielsweise Füllstoffe, Pigmente, Stabilisatoren oder Verstärkungsmittel, wie Kohlenstoff-, Bor- oder Glasfasern, zugegeben werden. Die erfindungsgemässen Polyarylenether können auch zusammen mit anderen Thermoplasten verarbeitet werden.

Vorzugsweise eignen sich die erfindungsgemässen Polyarylenether als Matrixharze für die Herstellung von Faserverbundsystemen, wobei man als Verstärkungsfasern die üblichen bei der Verstärkung technischer Werkstoffe verwendeten Fasern einsetzen kann. Diese können organische oder anorganische Fasern, Naturfasern oder Synthesefasern, wie Aramid-Fasern sein, und als Faserbündel, als orientierte oder nicht-orientierte Fasern oder als Endlosfasern vorliegen. Beispielsweise verwendet man als Verstärkungsfasern Glas-, Asbest-, Bor-, Kohlenstoff- und Metallfasern.

Eine weitere bevorzugte Anwendungsmöglichkeit für die Polyarylenetherketone und insbesondere für die -sulfone besteht in der Modifizierung anderer Kunststoffe. Diese Kunststoffe können gründsätzlich Thermoplaste oder Duromere sein. Besondere Bedeutung erlangte die Modifizierung von hitzehärtbaren Harzen, insbesondere von Epoxidharzen oder Bismaleinimiden. Solche besonderen Bedürfnissen angepassten Polymersysteme sind beispielsweise in der US 3,530.087 beschrieben. Besondere Bedeutung erlangten derartige Systeme als Matrixharze, welche zur Herstellung von Verbundbauteilen zum Einsatz gelangen. Ueblicherweise werden etwa 5-100, vorzugsweise 10-80 Gew. teile Polyarylenether pro 100 Gew.teile zu modifizierenden Kunststoff eingesetzt.

Besonders hervorzuheben sind die unerwartet hohe Löslichkeit der erfindungsgemässen Polyarylethersulfone in Methylenchlorid, und die sehr gute Stabilität dieser Lösungen.

Beispiel 1: In einem Rundkolben mit Rührer und Schutzgasanschluss wird unter Stickstoff eine Mischung aus 18,62 g (0,1001 mol) Phenylhydrochinon, 66,35 g Diphenylsulfon, 15,40 g (0,114 mol) Kaliumcarbonat und 56 g Xylol bei einer Badtemperatur von 200°C erhitzt und ein Xylol/ Wasser-Gemisch abdestilliert. Gegen Ende des Destillationsvorganges wird dabei kurzzeitig Vakuum (2 mbar) angelegt. Sodann werden 25,65 g (0,1001 mol) 4,4'-Difluordiphenylsulfon zu der Reaktionsmischung gegeben, die Temperatur auf 250°C erhöht und dort 1 Stunde belassen. Danach wird die Temperatur auf 320°C erhöht und diese Temperatur 4 Stunden beibehalten, wobei die Reaktionsmischung in zunehmendem Masse viskos wird.

Nach Abkühlen wird das Reaktionsgemisch dem Kolben entnommen, pulverisiert, mit 2-n Salzsäure versetzt und zunächst mit Wasser, dann mit Aceton extrahiert. Das so gereinigte Polymere wird danach im Vakuumtrockenschrank bis zu einer Temperatur von 240°C getrocknet. Ein auf diese Weise hergestelltes Polyarylenetherketon besitzt eine reduzierte Viskosität (1 Gew.-% Polymeres in N-Methylpyrrolidon (NMP) bei 25°C) von 1,12 dl/g.

Beispiele 2-20: Die in der Tabelle angegebenen Beispiele 2-20 wurden in analoger Weise hergestellt. Abweichend von der allgemeinen Vorschrift wurden die Verbindungen 6-20 mit verdünnter Essigsäure und nicht mit Salzsäure versetzt. Die Verbindungen 6-19 wurden nach der beschriebenen Wasser/Aceton-Extraktion in Methylenchlorid gelöst, eine geringe Menge unlösliches Material abfiltriert und durch Eingiessen in Isopropanol ausgefällt.

Die Polyarylenether der Beispiele 1-15 und 18-20 sind zu mehr als 25 Gew.-% in Methylenchlorid löslich. Die in dieser Konzentration hergestellten Lösungen sind über mehrere Wochen bei Raumtemperatur stabil. Es wird keine Trübung und kein Polymer-niederschlag beobachtet.

| | Polyarylenether hergestellt aus | Reaktions-bedingungen | red. Visk. [dl/g] | Tg [°C] (DSC) | Löslichkeit in $CH_2Cl_2$ |
|---|---|---|---|---|---|
| 1 | Polyethersulfon<br>Phenylhydrochinon (0,1000 mol)<br>4,4'-Difluordiphenylsulfon (0,1001 mol)<br>Kaliumcarbonat (0,114 mol) | 1 h/250°C<br>4 h/320°C | 1,12 | 194 | > 25 % |
| 2 | Polyethersulfon<br>Phenylhydrochinon (0,1001 mol)<br>4,4'-Dichlordiphenylsulfon (0,1002 mol)<br>Kaliumcarbonat (0,1207 mol) | 45 min/230°C<br>45 min/250°C<br>30 min/300°C<br>3 h/320°C | 0,36 | 192 | > 25 % |
| 3 | Polyethersulfon-Copolymeres<br>Phenylhydrochinon (0,05 mol)<br>4,4'-Dihydroxydiphenylsulfon (0,05 mol)<br>4,4'-Dichlordiphenylsulfon (0,10 mol)<br>Kaliumcarbonat (0,1106 mol) | 1 h/250°C*)<br>3 h/320°C | 0,46 | 208 | > 25 % |
| 4 | Polyethersulfon-Copolymeres<br>Phenylhydrochinon (0,0502 mol)<br>4,4'-Dihydroxydiphenylsulfon (0,0501 mol)<br>4,4'-Dichlordiphenylsulfon (0,1004 mol)<br>Kaliumcarbonat (0,1120 mol) | 1 h/250°C<br>5 h/320°C | 0,55 | 211 | > 25 % |
| 5 | Polyethersulfon-Copolymeres<br>Phenylhydrochinon (0,0502 mol)<br>4,4'-Dihydroxybiphenyl (0,0503 mol)<br>4,4'-Dichlordiphenylsulfon (0,1003 mol)<br>Kaliumcarbonat (0,1122 mol) | 1 h/250°C<br>3 h/320°C | 0,64 | 199 | > 25 % |

*) Reaktion ohne Xylol-Zusatz, Wasser-Abdestillation bei 250°C

| | Polyarylenether hergestellt aus | Reaktions-bedingungen | red. Visk. [dl/g] | Tg [°C] (DSC) | Löslichkeit in $CH_2Cl_2$ |
|---|---|---|---|---|---|
| 6 | Polyethersulfon-Copolymeres<br>Phenylhydrochinon (0,3008 mol)<br>4,4'-Dihydroxydiphenylsulfon (0,1003 mol)<br>4,4'-Dichlordiphenylsulfon (0,4000 mol)<br>Kaliumcarbonat (0,4020 mol) | 30 min/225°C<br>1 h/250°C<br>3 h/320°C | 0,50 | 204 | > 25 % |
| 7 | Polyethersulfon-Copolymeres<br>Phenylhydrochinon (0,1334 mol)<br>4,4'-Dihydroxybiphenyl (0,2677 mol)<br>4,4'-Dichlordiphenylsulfon (0,4000 mol)<br>Kaliumcarbonat (0,4200 mol) | 30 min/225°C<br>1 h/250°C<br>3 h/300°C | 0,93 | 208 | > 25 % |
| 8 | Polyethersulfon-Copolymeres<br>Phenylhydrochinon (0,2005 mol)<br>4,4'-Dihydroxydiphenylsulfon (0,1003 mol)<br>4,4'-Dihydroxybiphenyl (0,1003 mol)<br>4,4'-Dichlordiphenylsulfon (0,4000 mol)<br>Kaliumcarbonat (0,4020 mol) | 30 min/225°C<br>1 h/250°C<br>3 h/320°C | 0,79 | 214 | > 25 % |
| 9 | Polyethersulfon-Copolymeres<br>Phenylhydrochinon (0,1003 mol)<br>4,4'-Dihydroxydiphenylsulfon (0,1003 mol)<br>4,4'-Dihydroxybiphenyl (0,2005 mol)<br>4,4'-Dichlordiphenylsulfon (0,4000 mol)<br>Kaliumcarbonat (0,4200 mol) | 30 min/225°C<br>1 h/250°C<br>3 h/320°C | 1,00 | 231 | > 25 % |

| | Polyarylenether hergestellt aus | Reaktions-bedingungen | red. Visk. [dl/g] | Tg [°C] (DSC) | Löslichkeit in $CH_2Cl_2$ |
|---|---|---|---|---|---|
| 10 | Polyethersulfon-Copolymeres<br>Phenylhydrochinon (0,1003 mol)<br>4,4'-Dihydroxydiphenylsulfon (0,2005 mol)<br>4,4'-Dihydroxybiphenyl (0,1003 mol)<br>4,4'-Dichlordiphenylsulfon (0,4000 mol)<br>Kaliumcarbonat (0,4200 mol) | 30 min/225°C<br>1 h/250°C<br>3 h/320°C | 0,85 | 233 | > 25 % |
| 11 | Polyethersulfon-Copolymeres<br>Phenylhydrochinon (0,2005 mol)<br>2,7-Dihydroxynaphthalin (0,2005 mol)<br>4,4'-Dichlordiphenylsulfon (0,4000 mol)<br>Kaliumcarbonat (0,4200 mol) | 30 min/225°C<br>1 h/250°C<br>3 h/300°C | 0,56 | 199 | > 25 % |
| 12 | Polyethersulfon-Copolymeres<br>Phenylhydrochinon (0,2005 mol)<br>1,5-Dihydroxynaphthalin (0,2005 mol)<br>4,4'-Dichlordiphenylsulfon (0,4000 mol)<br>Kaliumcarbonat (0,4200 mol) | 30 min/225°C<br>1 h/250°C<br>3 h/300°C | 0,53 | 212 | > 25 % |
| 13 | Polyethersulfon-Copolymeres<br>Phenylhydrochinon (0,1003 mol)<br>4,4'-Dihydroxydiphenylsulfon (0,2005 mol)<br>1,5-Dihydroxynaphthalin (0,1003 mol)<br>4,4'-Dichlordiphenylsulfon (0,4000 mol)<br>Kaliumcarbonat (0,4200 mol) | 30 min/225°C<br>1 h/250°C<br>3 h/300°C | 0,64 | 222 | > 25 % |

| Polyarylenether hergestellt aus | Reaktionsbedingungen | red. Visk. [dl/g] | Tg [°C] (DSC) | Löslichkeit in $CH_2Cl_2$ |
|---|---|---|---|---|
| 14 Polyethersulfon-Copolymeres<br>Phenylhydrochinon (0,1003 mol)<br>4,4'-Dihydroxybiphenyl (0,1003 mol)<br>1,5-Dihydroxynaphthalin (0,2005 mol)<br>4,4'-Dichlordiphenylsulfon (0,4000 mol)<br>Kaliumcarbonat (0,4200 mol) | 30 min/225°C<br>1 h/250°C<br>3 h/300°C | 0,59 | 216 | > 25 % |
| 15 Polyethersulfon-Copolymeres<br>Phenylhydrochinon (0,1003 mol)<br>4,4'-Dihydroxybiphenyl (0,2005 mol)<br>1,5-Dihydroxynaphthalin (0,1003 mol)<br>4,4'-Dichlordiphenylsulfon (0,4000 mol)<br>Kaliumcarbonat (0,4200 mol) | 30 min/225°C<br>1 h/250°C<br>3 h/300°C | 0,69 | 215 | > 25 % |
| 16 Polyethersulfonketon-Copolymeres<br>Phenylhydrochinon (0,2007 mol)<br>4,4'-Dihydroxydiphenylsulfon (0,2006 mol)<br>4,4'-Dichlordiphenylsulfon (0,3001 mol)<br>4,4'-Difluorbenzophenon (0,1001 mol)<br>Kaliumcarbonat (0,4233 mol) | 1 h/250°C<br>1 h/275°C<br>1 h/300°C<br>3 h/320°C | 0,58 | 191 | > 20 % |
| 17 Polyethersulfonketon-Copolymeres<br>Phenylhydrochinon (0,2006 mol)<br>4,4'-Dihydroxydiphenylsulfon (0,2006 mol)<br>4,4'-Dichlordiphenylsulfon (0,2001 mol)<br>4,4'-Difluorbenzophenon (0,2002 mol)<br>Kaliumcarbonat (0,4218 mol) | 1 h/250°C<br>1 h/275°C<br>1 h/300°C<br>3 h/320°C | 0,53 | 191 | > 20 % |

| Polyarylenether hergestellt aus | Reaktions-bedingungen | red. Visk. [dl/g] | Tg [°C] (DSC) | Löslichkeit in $CH_2Cl_2$ |
|---|---|---|---|---|
| 18 Polyethersulfon-Copolymeres<br>Phenylhydrochinon (0,0503 mol)<br>3,3',5,5'-Tetramethyl-4,4'-dihydroxy-diphenylsulfon (0,0502 mol)<br>4,4'-Dichlordiphenylsulfon (0,1001 mol)<br>Kaliumcarbonat (0,1052 mol) | 1 h/250°C<br>1 h/275°C<br>4 h/280°C | 0,48 | 224 | > 25 % |
| 19 Polyethersulfon-Copolymeres<br>Phenylhydrochinon (0,0502 mol)<br>3,3',5,5'-Tetramethyl-4,4'-dihydroxy-biphenyl (0,0635 mol)<br>4,4'-Dichlordiphenylsulfon (0,1001 mol)<br>Kaliumcarbonat (0,1001 mol) | 1 h/250°C<br>1 h/275°C<br>4 h/280°C | 0,23 | 230 | > 25 % |
| 20 Polyethersulfon<br>2-(4-Methylphenyl)-hydrochinon (0,0999 mol)<br>4,4'-Dichlordiphenylsulfon (0,1002 mol)<br>Kaliumcarbonat (0,1119 mol) | 1 h/250°C<br>3 h/280°C | 0,82 | 196 | > 25 % |

red. Visk.: 1 Gew.% Polymeres in NMP bei 25°C (NMP: N-Methylpyrrolidon)

Die so hergestellten Polyarylenether werden in einer Plattenpresse bei 280°C mit einer Kraft von 3000 N während 10 Minuten gepresst. Man erhält klare, flexible Filme, die sich wiederholt ohne Bruch biegen und falten lassen.

Beispiel 21: 710 g (2,84 mol) 4,4'-Dihydroxydiphenylsulfon, 59,5 g (0,32 mol) Phenylhydrochinon, 892 g (3,11 mol)

4,4'-Dichlordiphenylsulfon, 462 g (3,33 mol) Kaliumcarbonat und 1660 g Diphenylsulfon werden in einen 10 Metallreaktor unter Stickstoff-Spülung auf 180°C erhitzt. Nach Erreichen von 180°C Innentemperatur wird das Rohstoff-gemisch 2 h gerührt. Das bei der Reaktion gebildete Kondensationswasser destilliert über einen absteigenden Kühler fortlaufend aus dem Reaktionsgemisch ab. Nach 2 h bei 180°C wird die Reaktionstemperatur innerhalb von weiteren 2 h stufenweise auf 270°C erhöht. Nach Erreichen von 270°C wird die Temperatur 4 h konstant beibehalten. Das Reaktionsgemisch wird danach über ein Bodenventil dem Reaktionskessel entnommen und nach Abkühlen grob gemahlen.

Das gemahlene Reaktionsgemisch wird durch Extraktion (3 x Aceton/Wasser = 80/20; 1 x Wasser) aufgearbeitet. Zum Freisetzen der OH-Endgruppen wird bei der Wasser-extraktion konz. Essigsäure zugesetzt. Das Polyethersulfon-Copolymere wird anschliessend bei 100°C im Vakuum getrocknet. Es weist eine reduzierte Viskosität von 0,67 dl/g (1 % Polymeres in NMP bei 25°C), eine Glasübergangstemperatur von 227°C und einen OH-Endgruppengehalt von 55 µVal/g auf. Es ist zu mehr als 25 % klar in Methylenchlorid löslich.

Beispiel 22: In einem Rundkolben werden unter Stickstoff 200 ml Xylol, 400 ml N-Methylpyrrolidon (NMO), 37,25 g (0,2000 mol) Phenylhydrochinon und 69,13 g (0,5002 mol) Kaliumcarbonat unter Rückfluss 2 Stunden erhitzt und über einen Wasserabscheider ein Xylol/NMP/Wasser-Gemisch (210 ml) abdestilliert. Nach Abkühlung erfolgt die Zugabe von 57,50 g 4,4′-Dichlordiphenylsulfon (0,2002 mol). Die Reaktionsmischung wird nun 2 Stunden unter Rückfluss erhitzt, über Nacht bei Raumtemperatur stehengelassen und dann weitere 6 Stunden unter Rückfluss erhitzt.

Nach Abkühlen wird die viskose Lösung mit 200 ml NMP verdünnt und das Polymere durch Eingiessen in Isopropanol ausgefällt. Der Niederschlag wird filtriert, mit verdünnter Essigsäure versetzt und zunächst mit Wasser, dann mit einer Wasser/Aceton-Mischung (1:4) extrahiert. Das Polymere wird anschliessend in Methylenchlorid gelöst, eine geringe Menge unlösliches Material abfiltriert und in Isopropanol ausgefällt. Die Trocknung des Polymeren erfolgt im Vakuumtrockenschrank bis zu einer Temperatur von 240°C. Ein nach diesem Verfahren hergestelltes Polyethersulfon mit Phenylhydrochinon-Einheiten weist eine red. Viskosität (1 % Polymeres in NMP bei 25°C) von 0,44 dl/g auf. Es ist zu mehr als 25 % in Methylenchlorid löslich.

Beispiel 23: Gemäss dem in Beispiel 21 beschriebenen Syntheseverfahren wird ein Polyethersulfon-Copolymeres aus 670,5 g (2,673 mol) 4,4'-Dihydroxydiphenylsulfon, 88,2 g (0,4725 mol) Phenylhydrochinon, 891 g (3,1023 mol) 4,4'-Dichlordiphenylsulfon und 461,5 g (3,334 mol) Kaliumcarbonat hergestellt. Das resultierende Polymere weist eine red. Viskosität von 0,46 dl/g, einen OH-Endgruppengehalt von 46 µVal/g und eine Glasübergangstemperatur von 234°C auf.

Dieses Polymere wird gemäss in der Tabelle angegebenen Gewichtsteilen als Lösung in Methylenchlorid zu einer Mischung, bestehend aus 50 Teilen Tetraglycidyldiaminodiphenylmethan und 50 Teilen Triglycidyl-p-aminophenol gegeben und das Lösungsmittel im Vakuum entfernt. Nach Zugabe von 50 Teilen p-Diaminodiphenylsulfon wird die Mischung 2 Stunden bei 160°C, sowie 2 Stunden bei 210°C ausgehärtet. Aus einer so hergestellten Platte werden Prüfkörper geschnitten und die Bruchzähigkeit ($G_{Ic}$, mittels bend notch gemäss ASTM E 399) bestimmt. Bei allen verwendeten Konzentrationen (10, 20 und 30 Teile Polyethersulfon-Zusatz) ergeben sich dabei wesentlich höhere $G_{Ic}$-Werte bei den erfindungsgemässen Polyethersulfonen im Vergleich zu analog hergestellten Prüfkörpern mit einem handelsüblichen Polyethersulfon (Victrex 5003 P).

Tabelle :

| Bruchzähigkeit von Thermoplast-modifizierten Epoxyharzen | | |
|---|---|---|
| Zusatz Thermoplast (Teile) | Bruchzähigkeit ($G_{Ic}$) ($J/m^2$) | |
| | Beispiel 23 | Vergleich |
| 10 | 225 | 177 |
| 20 | 268 | 211 |
| 30 | 357 | 291 |

**Patentansprüche**

**Patentansprüche für folgende Vertragsstaaten : DE, FR, GB, IT, NL, SE**

**1.** Polyarylenether, die, bezogen auf die Gesamtmenge der im Polyetherharz vorhandenen Strukturelemente, 5-100 mol-% eines wiederkehrenden Strukturelements der Formel I

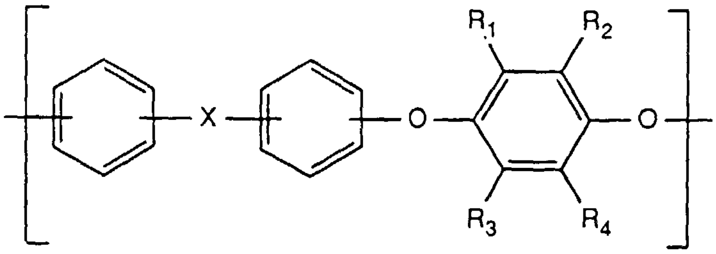

(I)

und 0-95 mol-% eines wiederkehrenden Strukturelements der Formel II

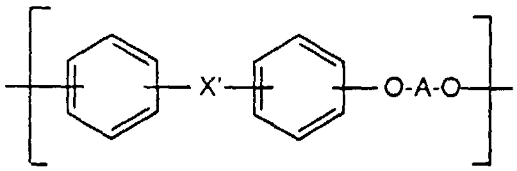

(II)

enthalten, worin X und X' unabhängig voneinander -SO-, $-SO_2-$ oder -CO- bedeuten, einer der Reste $R_1$, $R_2$, $R_3$ und $R_4$ Phenyl oder mit einer bis drei $(C_1-C_4)$Alkylgruppen substituiertes Phenyl ist und die übrigen Reste $R_1$, $R_2$, $R_3$ und $R_4$ unabhängig voneinander Wasserstoff, $C_1-C_4$-Alkyl, Phenyl oder mit einer bis drei $(C_1-C_4)$-Alkylgruppen substituiertes Phenyl sind und A eine Gruppe der Formeln IIIa bis IIIg darstellt

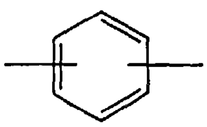 (IIIa), 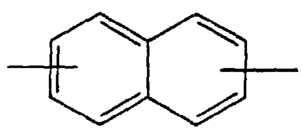 (IIIb), 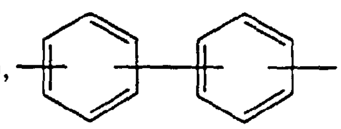 (IIIc),

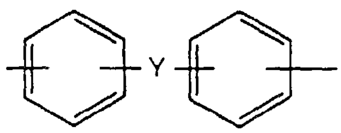 (IIId), 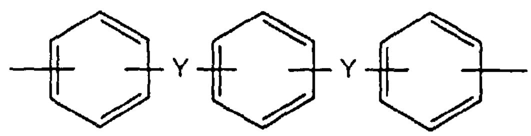 (IIIe),

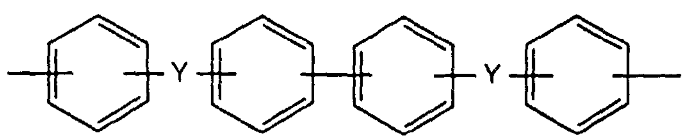 (IIIf) oder,

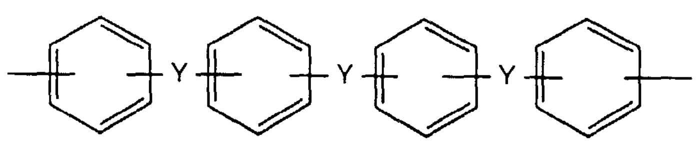 (IIIg),

wobei Y für $-CH_2-$, $-C(CH_3)_2-$, $-C(CH_3)(C_6H_5)-$, $-C(CF_3)_2-$, -S-,-SO-, $-SO_2-$, -O- oder -CO- steht, mit der Massgabe, dass mindestens 25 % der Bindungen X und/oder X′ und/oder Y $-SO_2-$ bedeuten.

2. Polyarylenether gemäss Anspruch 1, die 10-100 mol-% eines wiederkehrenden Strukturelements der Formel I und 90-0 mol-% eines wiederkehrenden Strukturelements der Formel II enthalten.

3. Polyarylenether gemäss Anspruch 1, die 25-100 mol-% eines wiederkehrenden Strukturelements der Formel I und 75-0 mol-% eines wiederkehrenden Strukturelements der Formel II enthalten.

**4.** Polyarylenether gemäss Anspruch 1, wobei mindestens 50 % der Bindungen X und/oder X′ und/oder Y $-SO_2-$ bedeuten.

**5.** Polyarylenether gemäss Anspruch 1, wobei einer oder zwei der Reste $R_1$, $R_2$, $R_3$ und $R_4$ Phenyl oder Tolyl sind und die übrigen Wasserstoff bedeuten.

**6.** Polyarylenether gemäss Anspruch 4, wobei einer der Reste $R_1$, $R_2$, $R_3$ oder $R_4$ Phenyl ist.

**7.** Polyarylenether gemäss Anspruch 1, wobei Y in den Formeln IIId, IIIe, IIIf und IIIg $-C(CH_3)_2-$, -S-, $-SO_2-$, -O- oder -CO- bedeutet.

**8.** Polyarylenether gemäss Anspruch 1, wobei A eine Gruppe der Formeln IIIa, IIIb, IIIc oder IIId, worin Y $-C(CH_3)_2-$, -S-, $-SO_2-$, -O- oder -CO- ist, bedeutet.

**9.** Polyarylenether gemäss Anspruch 1, wobei X in der Formel I und X′ in der Formel II unabhängig voneinander $-SO_2-$ oder -CO- bedeuten.

**10.** Polyarylenether gemäss Anspruch 8, wobei X und X′ $-SO_2-$ bedeuten.

**11.** Polyarylenether gemäss Anspruch 1, wobei X und X' $-SO_2-$ bedeuten und A der Formel IIIb oder der Formel IIIc entspricht.

**12.** Polyarylenether gemäss Anspruch 1, wobei X und X' $-SO_2-$ bedeuten und A gleich

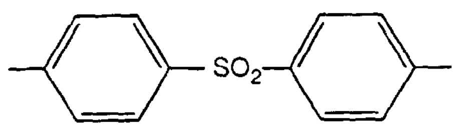 ist.

**13.** Verfahren zum Herstellen von Polyarylenethern gemäss Anspruch 1, dadurch gekennzeichnet, dass man mindestens eine Verbindung der Formel IV

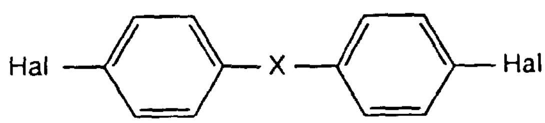 (IV),

worin Hal für Halogen, insbesondere Fluor oder Chlor steht, und X die in Anspruch 1 angegebene Bedeutung hat, mit einem Hydrochinon der Formel (V)

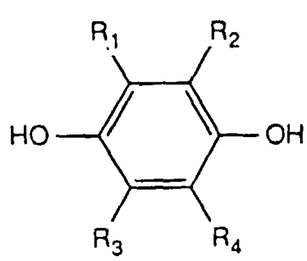 (V),

worin $R_1$, $R_2$, $R_3$ und $R_4$ die in Anspruch 1 angegebenen Bedeutungen haben, allein oder mit einem Gemisch aus einer Verbindung der Formel V und einem darin bis zu 95 mol-% enthaltenen Phenol der Formel VI

HO-A-OH (VI),

worin A die in Anspruch 1 angegebene Bedeutung hat,
in an sich bekannter Weise in Gegenwart alkalischer Katalysatoren in einem polaren aprotischen Lösungsmittel

polykondensiert.

**14.** Verfahren gemäss Anspruch 13, wobei anstelle des Diphenols der Formeln V und VI die entsprechenden Alkali- oder Erdalkali-Phenolate eingesetzt werden.

**15.** Verwendung der Polyarylenether gemäss Anspruch 1 als technische Werkstoffe.

**16.** Verwendung gemäss Anspruch 15 zum Modifizieren anderer Kunststoffe.

**17.** Verwendung gemäss Anspruch 16 zum Modifizieren von Epoxidharzen oder Bismaleinimiden.

**Patentansprüche für folgenden Vertragsstaat : ES**

**1.** Verfahren zur Herstellung von Polyarylenethern, die, bezogen auf die Gesamtmenge der im Polyetherharz vorhandenen Strukturelemente, 5-100 mol-% eines wiederkehrenden Strukturelements der Formel I

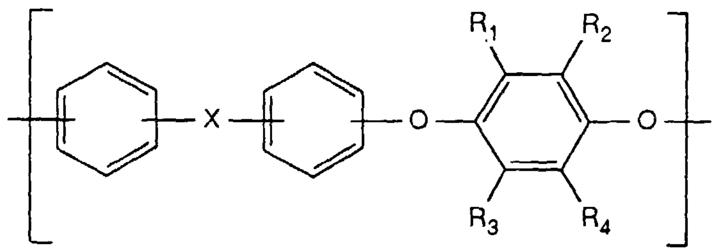

(I)

und 0-95 mol-% eines wiederkehrenden Strukturelements der Formel II

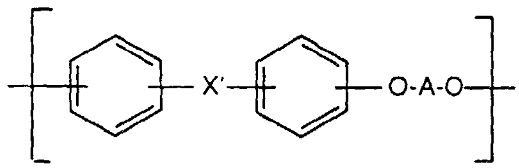

(II)

enthalten, worin X und X' unabhängig voneinander -SO-, $-SO_2-$, oder -CO- bedeuten, einer der Reste $R_1$, $R_2$, $R_3$ und $R_4$ Phenyl oder mit einer bis drei $(C_1-C_4)$Alkylgruppen substituiertes Phenyl ist und die übrigen Reste $R_1$, $R_2$, $R_3$ und $R_4$ unabhängig voneinander Wasserstoff, $C_1-C_4$-Alkyl, Phenyl oder mit einer bis drei $(C_1-C_4)$-Alkylgruppen substituiertes Phenyl sind und A eine Gruppe der Formeln IIIa bis IIIg darstellt

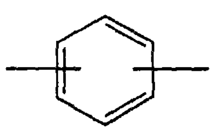 (IIIa), 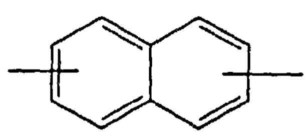 (IIIb), 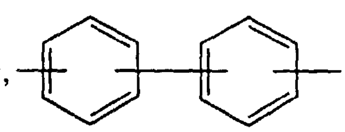 (IIIc),

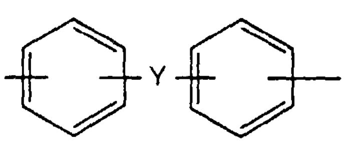 (IIId), 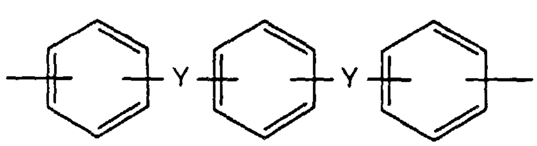 (IIIe),

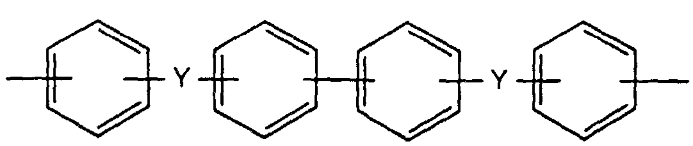 (IIIf) oder,

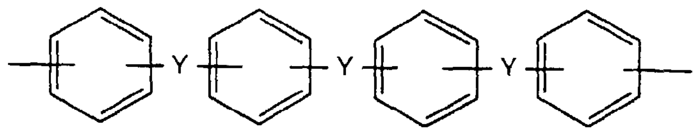 (IIIg),

wobei Y für $-CH_2-$, $-C(CH_3)_2-$, $-C(CH_3)(C_6H_5)-$, $-C(CF_3)_2-$, -S-, -SO-, $-SO_2-$, -O- oder -CO- steht, mit der Massgabe, dass mindestens 25 % der Bindungen X und/oder X' und/oder Y $-SO_2-$ bedeuten,
dadurch gekennzeichnet, dass man mindestens eine Verbindung der Formel IV

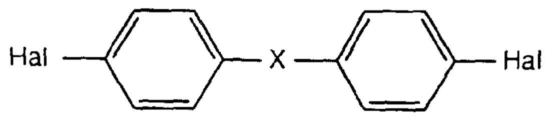 (IV),

worin Hal für Halogen, insbesondere Fluor oder Chlor steht, und X die oben angegebene Bedeutung hat, mit einem Hydrochinon der Formel (V)

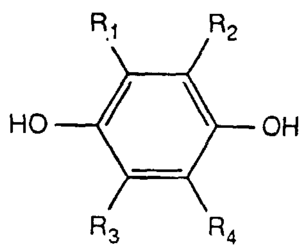 (V),

worin $R_1$, $R_2$, $R_3$ und $R_4$ die oben angegebenen Bedeutungen haben allein oder mit einem Gemisch aus einer Verbindung der Formel V und einem darin bis zu 95 mol-% enthaltenen Phenol der Formel VI

HO-A-OH (VI),

worin A die oben angegebene Bedeutung hat,
in an sich bekannter Weise in Gegenwart alkalischer Katalysatoren in einem polaren aprotischen Lösungsmittel polykondensiert.

**2.** Verfahren zur Herstellung von Polyarylenethern gemäss Anspruch 1, die 10-100 mol-% eines wiederkehrenden Strukturelements der Formel I und 90-0 mol-% eines wiederkehrenden Strukturelements der Formel II enthalten.

**3.** Verfahren zur Herstellung von Polyarylenethern gemäss Anspruch 1, die 25-100 mol-% eines wiederkehrenden Strukturelements der Formel I und 75-0 mol-% eines wiederkehrenden Strukturelements der Formel II enthalten.

**4.** Verfahren zur Herstellung von Polyarylenethern gemäss Anspruch 1, wobei mindestens 50 % der Bindungen X und/oder X' und/oder Y $-SO_2-$ bedeuten.

**5.** Verfahren zur Herstellung von Polyarylenethern gemäss Anspruch 1, wobei einer oder zwei der Reste $R_1$, $R_2$, $R_3$ und $R_4$ Phenyl oder Tolyl sind und die übrigen Wasserstoff bedeuten.

**6.** Verfahren zur Herstellung von Polyarylenethern gemäss Anspruch 4, wobei einer der Reste $R_1$, $R_2$, $R_3$ oder $R_4$ Phenyl ist.

**7.** Verfahren zur Herstellung von Polyarylenethern gemäss Anspruch 1, wobei Y in den Formeln IIId, IIIe, IIIf und IIIg $-C(CH_3)_2-$, -S-, $-SO_2-$, -O- oder -CO- bedeutet.

**8.** Verfahren zur Herstellung von Polyarylenethern gemäss Anspruch 1, wobei A eine Gruppe der Formeln IIIa, IIIb, IIIc oder IIId, worin Y $-C(CH_3)_2-$, -S-, $-SO_2-$, -O- oder -CO- ist, bedeutet.

9. Verfahren zur Herstellung von Polyarylenethern gemäss Anspruch 1, wobei X in der Formel I und X' in der Formel II unabhängig voneinander $-SO_2-$ oder -CO- bedeuten.

10. Verfahren zur Herstellung von Polyarylenethern gemäss Anspruch 8, wobei X und X' $-SO_2-$ bedeuten.

11. Verfahren zur Herstellung von Polyarylenethern gemäss Anspruch 1, wobei X und X' $-SO_2-$ bedeuten und A der Formel IIIb oder der Formel IIIc entspricht.

12. Verfahren zur Herstellung von Polyarylenethern gemäss Anspruch 1, wobei X und X' $-SO_2-$ bedeuten und A gleich

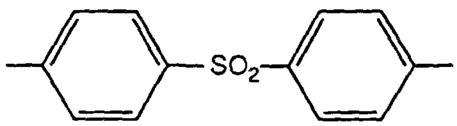

ist.

13. Verfahren gemäss Anspruch 1, wobei anstelle des Diphenols der Formeln V und VI die entsprechenden Alkali- oder Erdalkali-Phenolate eingesetzt werden.

14. Verwendung der Polyarylenether gemäss Anspruch 1 als technische Werkstoffe.

15. Verwendung gemäss Anspruch 14 zum Modifizieren anderer Kunststoffe.

16. Verwendung gemäss Anspruch 15 zum Modifizieren von Epoxidharzen oder Bismaleinimiden.

**Claims**

**Claims for the following Contracting States : DE, FR, GB, IT, NL, SE**

1. Polyarylene ethers containing 5-100 mole-% of a recurring structural element of formula I

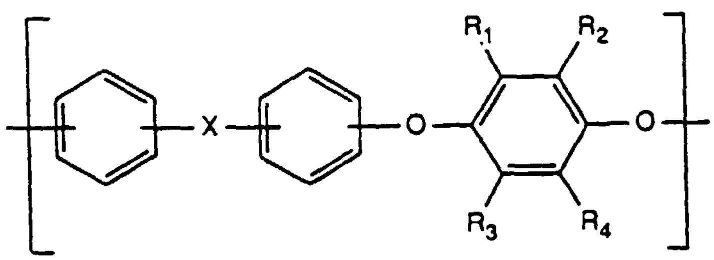

(I)

and 0-95 mole-% of a recurring structural element of formula II

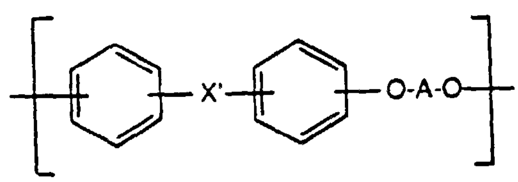

(II)

based on the total amount of the structural elements present in the polyether resin, wherein X and X' are independently -SO-, $-SO_2-$ or -CO-, one of the groups $R_1$, $R_2$, $R_3$ and $R_4$ is phenyl or phenyl substituted with one to three ($C_1$-$C_4$) alkyl groups and the remaining groups $R_1$, $R_2$, $R_3$ and $R_4$ are independently hydrogen, $C_1$-$C_4$ alkyl, phenyl, or phenyl substituted with one to three ($C_1$-$C_4$) alkyl groups, and A represents a group of formulas IIIa to IIIg

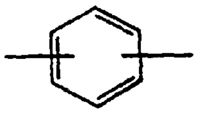 (IIIa), 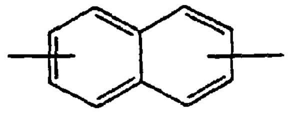 (IIIb), 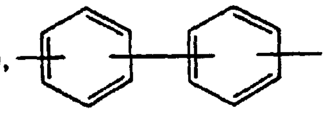 (IIIc),

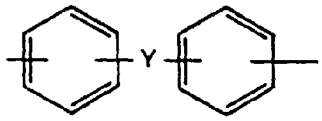 (IIId), 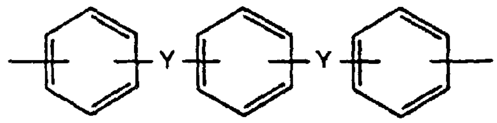 (IIIe),

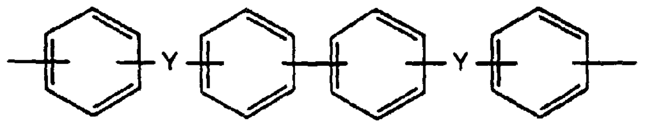 (IIIf) or

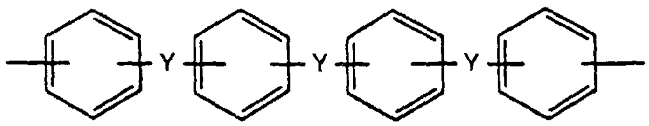 (IIIg),

wherein Y is $-CH_2-$, $-C(CH_3)_2-$, $-C(CH_3)(C_6H_5)-$, $-C(CF_3)_2-$, -S-, -SO-, $-SO_2-$, -O- or -CO- with the provision that at least 25% of the bonds X and/or X' and/or Y are $-SO_2-$.

**2.** Polyarylene ethers according to claim 1, containing 10-100 mole-% of a recurring structural element of formula I and 90-0 mole-% of a recurring structural element of formula II.

**3.** Polyarylene ethers according to claim 1, containing 25-100 mole-% of a recurring structural element of formula I and 75-0 mole-% of a recurring structural element of formula II.

**4.** Polyarylene ethers according to claim 1, wherein at least 50% of the bonds X and/or X' and/or Y are $-SO_2-$.

**5.** Polyarylene ethers according to claim 1, wherein one or two of the groups $R_1$, $R_2$, $R_3$ and $R_4$ are phenyl or tolyl and the remaining groups are hydrogen.

**6.** Polyarylene ethers according to claim 4, wherein one of the groups $R_1$, $R_2$, $R_3$ and $R_4$ is phenyl.

**7.** Polyarylene ethers according to claim 1, wherein Y in formulas IIId, IIIe, IIIf and IIIg is $-C(CH_3)_2-$, -S-, $-SO_2-$, -O- or -CO-.

**8.** Polyarylene ethers according to claim 1, wherein A represents a group of formulas IIIa, IIIb, IIIc or IIId, in which Y is $-C(CH_3)_2-$, -S-, $-SO_2-$, -O- or -CO-.

**9.** Polyarylene ethers according to claim 1, wherein X in formula I and X' in formula II are independently $-SO_2-$or -CO-.

**10.** Polyarylene ethers according to claim 8, wherein X and X' are $-SO_2-$.

**11.** Polyarylene ethers according to claim 1, wherein X and X' are $-SO_2-$ and A corresponds to formula IIIb or formula IIIc.

**12.** Polyarylene ethers according to claim 1, wherein X and X' are $-SO_2-$ and A is

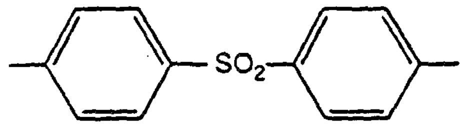

**13.** Process for the production of polyarylene ethers according to claim 1, characterized in that at least one compound of the formula IV

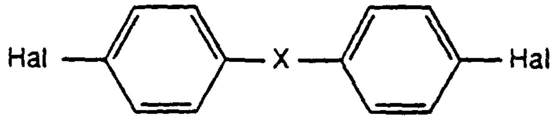

(IV),

wherein Hal represents halogen, in particular fluorine or chlorine, and X is as defined in claim 1 and a hydroquinone of the formula V

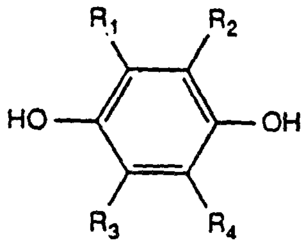

(V),

wherein $R_1$, $R_2$, $R_3$ and $R_4$ are as defined in claim 1, are subjected to a polycondensation reaction in a polar aprotic solvent in a known manner and in the presence of alkaline catalysts alone or together with a mixture of a compound of formula V and a phenol of formula VI contained therein in an amount of up to 95 mole-%

HO-A-OH (VI)

wherein A is as defined in claim 1.

**14.** Process according to claim 13, wherein instead of the diphenol of formulas V and VI the corresponding alkali or alkaline earth phenolates are used.

**15.** Use of the polyarylene ethers according to claim 1 as technical materials.

**16.** Use according to claim 15 for modifying other plastic materials.

**17.** Use according to claim 16 for modifying epoxy resins or bis-maleinimides.

**Claims for the following Contracting State: ES**

**1.** Process for the production of polyarylene ethers comprising 5-100 mole-% of a recurring structural element of formula I

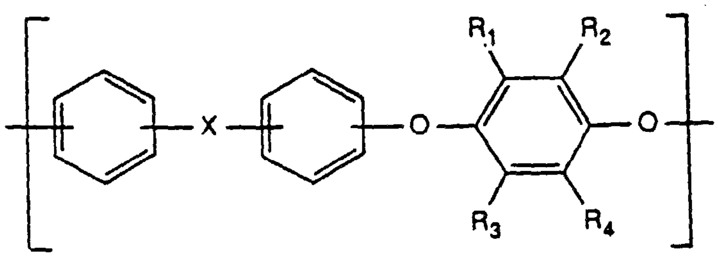

(I)

and 0-95 mole-% of a recurring structural element of formula II

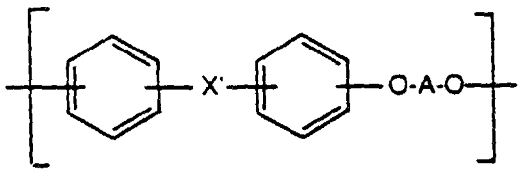 (II)

based on the total amount of the structural elements present in the polyether resin, wherein X and X' are independently -SO-, $-SO_2-$ or -CO-, one of the groups $R_1$, $R_2$, $R_3$ and $R_4$ is phenyl or phenyl substituted with one to three ($C_1$-$C_4$) alkyl groups and the remaining groups $R_1$, $R_2$, $R_3$ and $R_4$ are independently hydrogen, $C_1$-$C_4$ alkyl, phenyl, or phenyl substituted with one to three ($C_1$-$C_4$) alkyl groups, and A represents a group of formulas IIIa to IIIg

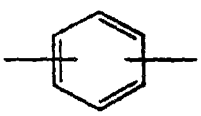 (IIIa), 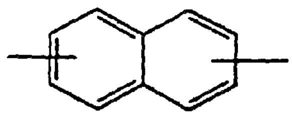 (IIIb), 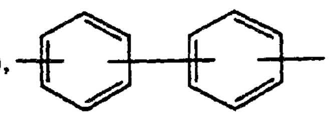 (IIIc),

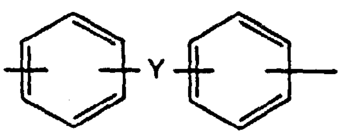 (IIId), 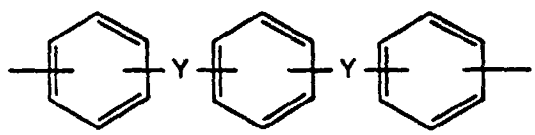 (IIIe),

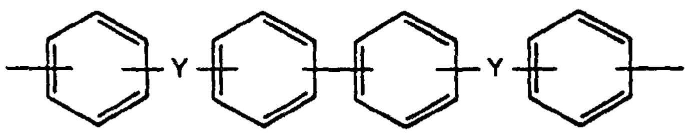 (IIIf) or

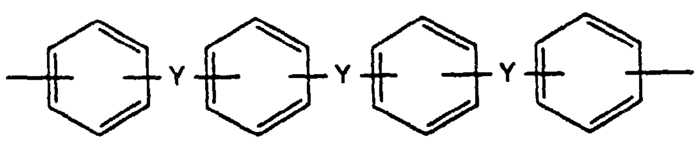 (IIIg),

wherein Y is $-CH_2-$, $-C(CH_3)_2-$, $-C(CH_3)(C_6H_5)-$, $-C(CF_3)_2-$, -S-, -SO-, $-SO_2-$, -O- or -CO- with the provision that at least 25% of the bonds X and/or X' and/or Y are $-SO_2-$,
characterized in that at least one compound of the formula IV

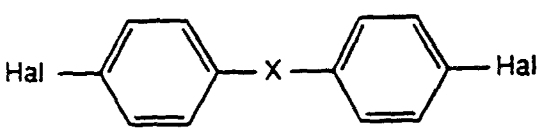 (IV),

wherein Hal represents halogen, in particular fluorine or chlorine, and X is as defined above and a hydroquinone of the formula V

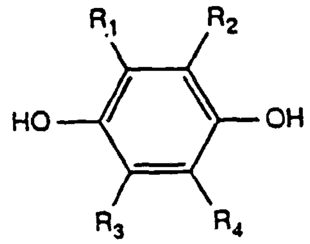

(V),

wherein $R_1$, $R_2$, $R_3$ and $R_4$ are as defined above, are subjected to a polycondensation reaction in a polar aprotic solvent in a known manner and in the presence of alkaline catalysts alone or together with a mixture of a compound of formula V and a phenol of formula VI contained therein in an amount of up to 95 mole-%

$$HO\text{-}A\text{-}OH \qquad (VI)$$

wherein A is as defined above.

**2.** Process for the production of polyarylene ethers according to claim 1, containing 10-100 mole-% of a recurring structural element of formula I and 90-0 mole-% of a recurring structural element of formula II.

**3.** Process for the production of polyarylene ethers according to claim 1, containing 25-100 mole-% of a recurring structural element of formula I and 75-0 mole-% of a recurring structural element of formula II.

**4.** Process for the production of polyarylene ethers according to claim 1, wherein at least 50% of the bonds X and/or X' and/or Y are $-SO_2-$.

**5.** Process for the production of polyarylene ethers according to claim 1, wherein one or two of the groups $R_1$, $R_2$, $R_3$ and $R_4$ are phenyl or tolyl and the remaining groups are hydrogen.

**6.** Process for the production of polyarylene ethers according to claim 4, wherein one of the groups $R_1$, $R_2$, $R_3$ and $R_4$ is phenyl.

**7.** Process for the production of polyarylene ethers according to claim 1, wherein Y in formulas IIId, IIIe, IIIf and IIIg is $-C(CH_3)_2-$, -S-, $-SO_2-$, -O- or -CO-.

**8.** Process for the production of polyarylene ethers according to claim 1, wherein A represents a group of formulas IIIa, IIIb, IIIc or IIId, in which Y is $-C(CH_3)_2-$, -S-, $-SO_2-$, -O- or -CO-.

**9.** Process for the production of polyarylene ethers according to claim 1, wherein X in formula I and X' in formula II are independently $-SO_2-$ or -CO-.

**10.** Process for the production of polyarylene ethers according to claim 8, wherein X and X' are $-SO_2-$.

**11.** Process for the production of polyarylene ethers according to claim 1, wherein X and X' are $-SO_2-$ and A corresponds to formula IIIb or formula IIIc.

**12.** Process for the production of polyarylene ethers according to claim 1, wherein X and X' are $-SO_2-$ and A is

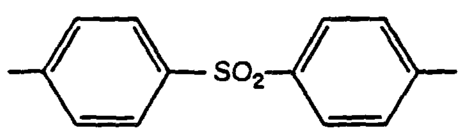

**13.** Process according to claim 1, wherein instead of the diphenol of formulas V and VI the corresponding alkali or alkaline earth phenolates are used.

**14.** Use of the polyarylene ethers according to claim 1 as technical materials.

**15.** Use according to claim 14 for modifying other plastic materials.

**16.** Use according to claim 15 for modifying epoxy resins or bis-maleinimides.

## Revendications

### Revendications pour les Etats contractants suivants : DE, FR, GB, IT, NL, SE

**1.** Poly(éthers d'arylène) qui, par rapport à la quantité totale d'éléments structurels présents dans la résine polyéther, contiennent 5-100 % molaires d'un élément structurel se répétant de formule I

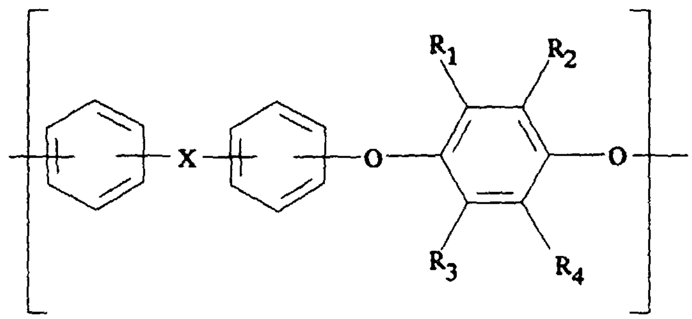

(I)

et 0-95 % molaires d'un élément structural se répétant de formule II

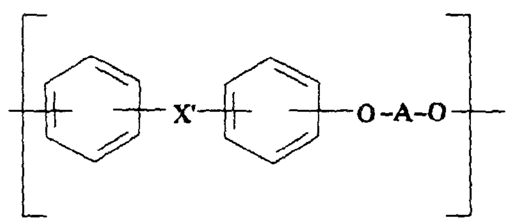

(II)

où X et X' représentent indépendamment l'un de l'autre -SO-, $-SO_2-$ ou -CO-, l'un des restes $R_1$, $R_2$, $R_3$ et R4 est un phényle ou un phényle substitué par un à trois groupes alkyles $C_1$-$C_4$ et les autres restes $R_1$, $R_2$, $R_3$ et $R_4$ représentent indépendamment l'un de l'autre un hydrogène, un alkyle $C_1$-$C_4$, un phényle ou un phényle substitué par un à trois groupes alkyles $C_1$-$C_4$ et A est un groupe de formules IIIa à IIIg

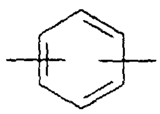 (IIIa), 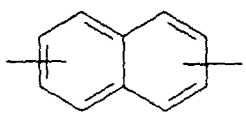 (IIIb), 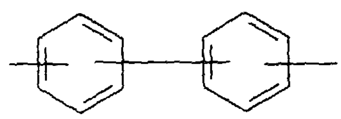 (IIIc),

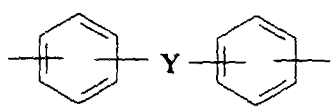 (IIId), 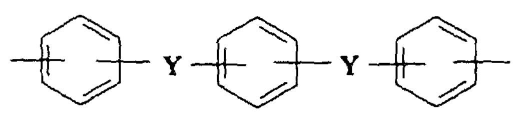 (IIIe),

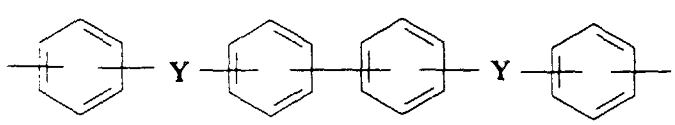 (IIIf),

ou

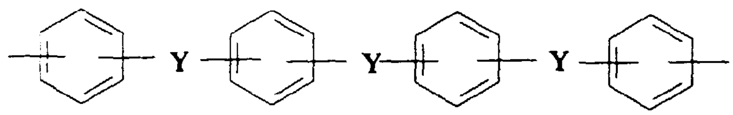 (IIIg),

où Y représente $-CH_2-$, $-C(CH_3)_2-$, $-C(CH_3)(C_6H_5)-$, $-C(CF_3)_2-$, -S-, -SO-, $-SO_2-$, -O- ou -CO-, à la condition qu'au moins 25 % des liaisons X et/ou X' et/ou Y représentent $-SO_2-$.

**2.** Poly(éthers d'arylène) selon la revendication 1, qui contiennent 10-100 % molaires d'un élément structural se répétant de formule I et 90-0% molaires d'un élément structural se répétant de formule II.

**3.** Poly(éthers d'arylène) selon la revendication 1, qui contiennent 25-100 % molaires d'un élément structural se répétant de formule I et 75-0 % molaires d'un élément structural se répétant de formule II.

**4.** Poly(éthers d'arylène) selon la revendication 1, où au moins 50 % des liaisons X et/ou X' et/ou Y représentent $-SO_2-$.

**5.** Poly(éthers d'arylène) selon la revendication 1, où un ou deux des restes $R_1$, $R_2$, $R_3$ et $R_4$ représentent un phényle ou un tolyle et les autres représentent l'hydrogène.

**6.** Poly(éthers d'arylène) selon la revendication 4, où l'un des restes $R_1$, $R_2$, $R_3$ ou $R_4$ représentent un phényle.

**7.** Poly(éthers d'arylène) selon la revendication 1, où Y dans les formules IIId, IIIe, IIIf et IIIg représentent $-C-(CH_3)_2-$, -S-, $-SO_2-$, -O- ou -CO-.

**8.** Poly(éthers d'arylène) selon la revendication 1, où A représente un groupe de formules IIIa, IIIb, IIIc ou IIId, où Y représente $-C(CH_3)_2-$, -S-, $-SO_2-$, -O- ou -CO.

**9.** Poly(éthers d'arylène) selon la revendication 1, où X dans la formule I et X' dans la formule II représentent indépendamment l'un de l'autre $-SO_2-$ ou -CO-.

**10.** Poly(éthers d'arylène) selon la revendication 8, où X et X' représentent $-SO_2-$.

**11.** Poly(éthers d'arylène) selon la revendication 1, où X et X' représentent $-SO_2-$ et A correspond à la formule IIIb ou à la formule IIIc.

**12.** Poly(éthers d'arylène) selon la revendication 1, où X et X' représentent $-SO_2-$ et A est

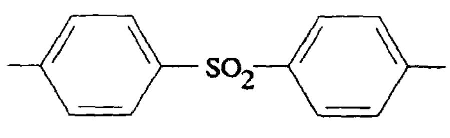

**13.** Procédé de préparation de poly(éthers d'arylène) selon la revendication 1, caractérisé en ce qu'on polycondense au moins un composé de formule IV

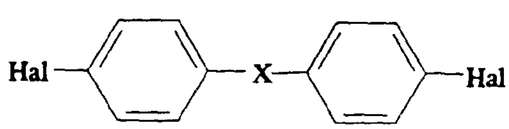 (IV),

où Hal est un halogène, notamment le fluor ou le chlore, et X a la signification donnée à la revendication 1, avec une hydroquinone de formule (V)

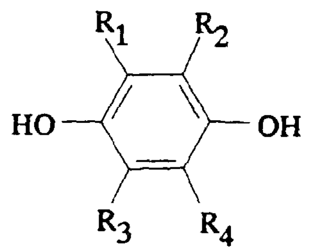

(V),

où $R_1$, $R_2$, $R_3$ et $R_4$ ont les significations données à la revendication 1, seule ou en mélange d'un composé de formule V et d'un phénol qui y est compris jusqu'à 95 % molaires de formule VI

HO-A-OH (VI),

où A a la signification donnée à la revendication 1,
de la manière connue en présence de catalyseurs alcalins dans un solvant non protique polaire.

**14.** Procédé selon la revendication 13, où, à la place du diphénol de formules V et VI, on utilise les phénolates d'alcalins ou d'alcalino-terreux correspondants.

**15.** Utilisation des poly(éthers d'arylène) selon la revendication 1, sous forme de matières premières techniques.

**16.** Utilisation selon la revendication pour modifier d'autres matières plastiques.

**17.** Utilisation selon la revendication 16 pour modifier des résines époxydes ou des bismaléinimide.

**Revendications pour l'Etat contractant suivant : ES**

**1.** Procédé de préparation de poly(éthers d'arylène) qui, par rapport à la quantité totale d'éléments structurels présents dans la résine polyéther, contiennent 5-100 % molaires d'un élément structurel se répétant de formule I

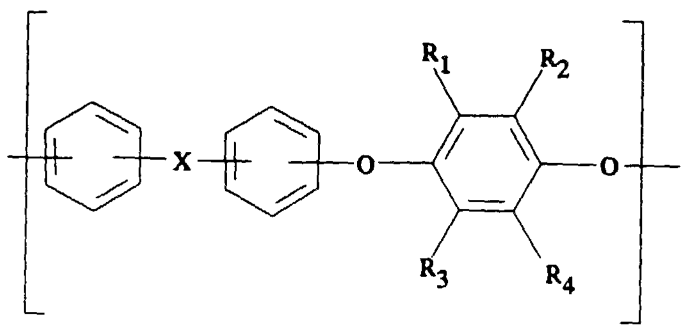

(I)

et 0-95 % molaires d'un élément structural se répétant de formule II

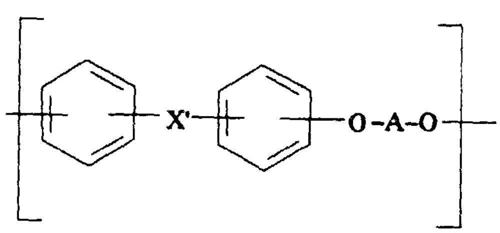

(II)

où X et X' représentent indépendamment l'un de l'autre -SO-, $-SO_2-$ ou -CO-, l'un des restes $R_1$, $R_2$, $R_3$ et $R_4$ est un phényle ou un phényle substitué par un à trois groupes alkyles $C_1$-$C_4$ et les autres restes $R_1$, $R_2$, $R_3$ et $R_4$ représentent indépendamment l'un de l'autre un hydrogène, un alkyle $C_1$-$C_4$, un phényle ou un phényle substitué par un à trois groupes alkyles $C_1$-$C_4$ et A est un groupe de formules IIIa à IIIg

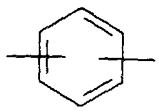 (IIIa), 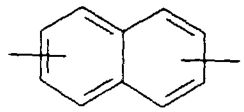 (IIIb), 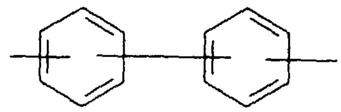 (IIIc),

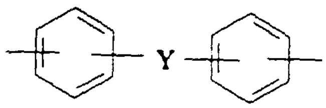 (IIId), 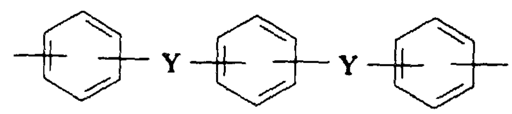 (IIIe),

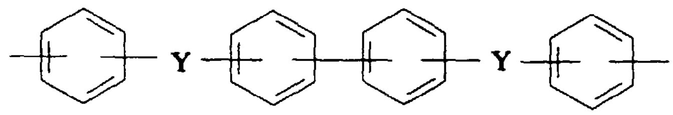 (IIIf), ou

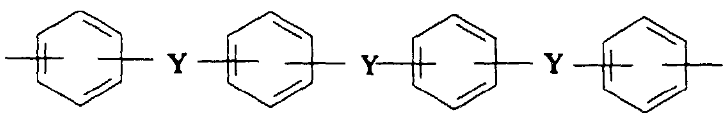 (IIIg),

où Y représente $-CH_2-$, $-C(CH_3)_2-$, $-C(CH_3)(C_6H_5)-$, $-C(CF_3)_2-$, -S-, -SO-, $-SO_2-$, -O- ou -CO-, à la condition qu'au moins 25 % des liaisons X et/ou X' et/ou Y représentent $-SO_2-$,
caractérisé en ce qu'on polycondense au moins un composé de formule IV

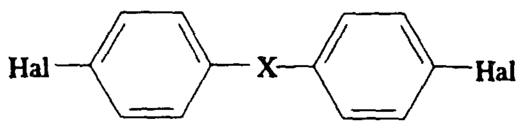 (IV),

où Hal est un halogène, notamment le fluor ou le chlore, et X a la signification donnée ci-dessus, avec une hydroquinone de formule (V)

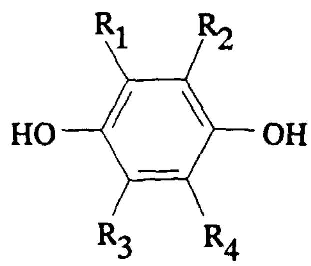 (V),

où $R_1$, $R_2$, $R_3$ et $R_4$ ont les significations données ci-dessus, seule ou en mélange d'un composé de formule V et d'un phénol qui y est compris jusqu'à 95 % molaires de formule VI

HO-A-OH (VI),

où A a la signification donnée ci-dessus,
de la manière connue en présence de catalyseurs alcalins dans un solvant non protique polaire.

2. Procédé de préparation de poly(éthers d'arylène) selon la revendication 1, qui contiennent 10-100 % molaires d'un élément structural se répétant de formule I et 90-0 % molaires d'un élément structural se répétant de formule II.

3. Procédé de préparation de poly(éthers d'arylène) selon la revendication 1, qui contiennent 25-100 % molaires d'un élément structural se répétant de formule I et 75-0 % molaires d'un élément structural se répétant de formule II.

4. Procédé de préparation de poly(éthers d'arylène) selon la revendication 1, où au moins 50 % des liaisons X et/ou X' et/ou Y représentent $-SO_2-$.

**5.** Procédé de préparation de poly(éthers d'arylène) selon la revendication 1, où un ou deux des restes $R_1$, $R_2$, $R_3$ et $R_4$ représentent un phényle ou un tolyle et les autres représentent l'hydrogène.

**6.** Procédé de préparation de poly(éthers d'arylène) selon la revendication 4, où l'un des restes $R_1$, $R_2$, $R_3$ ou $R_4$ représentent un phényle.

**7.** Procédé de préparation de poly(éthers d'arylène) selon la revendication 1, où Y dans les formules IIId, IIIe, IIIf et mg représente $-C-(CH_3)_2-$, -S-, $-SO_2-$, -O- ou -CO-.

**8.** Procédé de préparation de poly(éthers d'arylène) selon la revendication 1, où A représente un groupe de formules IIIa, IIIb, IIIC ou IIId, où Y représente $-C(CH_3)_2-$, -S-, $-SO_2-$, -O- ou -CO.

**9.** Procédé de préparation de poly(éthers d'arylène) selon la revendication 1, où X dans la formule I et X' dans la formule II représentent indépendamment l'un de l'autre $-SO_2-$ ou -CO-.

**10.** Procédé de préparation de poly(éthers d'arylène) selon la revendication 8, où X et X' représentent $-SO_2-$.

**11.** Procédé de préparation de poly(éthers d'arylène) selon la revendication 1, où X et X' représentent $-SO_2-$ et A correspond à la formule IIIb ou à la formule IIIc.

**12.** Procédé de préparation de poly(éthers d'arylène) selon la revendication 1, où X et X' représentent $-SO_2-$ et A est

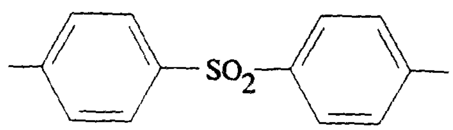

**13.** Procédé selon la revendication 1, où, à la place du diphénol de formules V et VI, on utilise les phénolates d'alcalins ou d'alcalino-terreux correspondants.

**14.** Utilisation des poly(éthers d'arylène) selon la revendication 1, sous forme de matières premières techniques.

**15.** Utilisation selon la revendication 14 pour modifier d'autres matières plastiques.

**16.** Utilisation selon la revendication 15 pour modifier des résines époxydes ou des bismaléinimides.